# EUROPÄISCHE PATENTSCHRIFT

(11) **EP 3 976 433 B1**
(45) Veröffentlichungstag und Bekanntmachung des Hinweises auf die Patenterteilung: **06.12.2023**
(21) Anmeldenummer: 20728991.9
(22) Anmeldetag: 18.05.2020
(51) Int. Cl.: B61B 12/02, B61B 12/06

(54) **VERFAHREN ZUM ERFASSEN EINES VERSCHLEISSES EINER SEILROLLE EINER SEILBAHNANLAGE**
METHOD FOR DETECTING WEAR OF A CABLE ROLLER OF A CABLEWAY INSTALLATION
PROCÉDÉ POUR DÉTECTER L'USURE D'UNE POULIE DE TÉLÉPHÉRIQUE

(30) Priorität: 28.05.2019 AT 504872019
(43) Veröffentlichungstag der Anmeldung: 06.04.2022
(73) Patentinhaber: Innova Patent GmbH, 6922 Wolfurt (AT)
(72) Erfinder: PFEIFER, Daniel, 6580 Sankt Anton am Arlberg (AT); MOHNI, Adrian, 9014 St. Gallen (CH)
(74) Vertreter: Patentanwälte Pinter & Weiss OG
(86) Internationale Anmeldenummer: PCT/EP2020/063812
(87) Internationale Veröffentlichungsnummer: WO 2020/239497

(56) Entgegenhaltungen:
- EP-A1- 3 620 340
- WO-A1-2019/038397
- DE-A1- 19 752 362
- DE-A1-102008 015 035
- US-A- 5 581 180
- US-A1- 2005 099 176

## Beschreibung

Die gegenständliche Erfindung betrifft ein Verfahren zum Erfassen eines Verschleißes einer Seilrolle einer Seilbahnanlage mit einem Förderseil, das über zumindest eine Seilrolle geführt wird, und mit zumindest einem Seilsensor, der in einer bekannten Lage zur Seilrolle angeordnet wird und mit dem der Abstand zwischen dem Förderseil und dem Seilsensor erfasst wird.

Bei Seilbahnanlagen wird ein Förderseil der Seilbahn auf der Strecke und in den Stationen über Seilrollen geführt. Das Förderseil wird an der Seilrolle auf einer Lauffläche, üblicherweise auf einem Gummiring mit einer Seilführungsrille, geführt. Die Seilrolle, insbesondere ein Gummiring der Seilrolle, kann im Betrieb der Seilbahn verschleißen, beispielsweise aufgrund von pendelnden Fahrzeugen am Förderseil oder aufgrund unsymmetrischer Beladung der Fahrzeuge, aber auch während des normalen Betriebs durch den Druck des Förderseiles auf die Lauffläche der Seilrolle. Das Förderseil kann an der Seilrolle aber auch verlaufen (seitliche Abweichung des Förderseils aus der Seilführungsrille der Seilrolle), was im schlimmsten Fall zum Herausspringen des Förderseils aus einer Seilrolle führen kann. Daher ist es schon bekannt, bei Seilbahnanlagen im Bereich der Rollenbatterien an den Seilbahnstützen oder auch in einer Station, im laufenden Betrieb eine Seillagenüberwachung vorzusehen, um ein unzulässiges Verlaufen des Förderseiles an einer Seilrolle, also eine seitliche Abweichung, zu erkennen. Die Seillagenüberwachung erfolgt mittels berührungslos arbeitender Sensoren, beispielsweise induktive Näherungssensoren (z.B. wie in der DE 197 52 362 A1 oder der US 2005/0099176 A1), Hall Sensoren (z.B. wie in der US 5,581,180 A) oder Wirbelstromsensoren (z.B. wie in der WO 2019/038397 A1). Bei einer unzulässigen seitlichen Abweichung des Förderseils wird die Seilbahnanlage gestoppt oder die Fördergeschwindigkeit reduziert. Beides ist im Betrieb der Seilbahnanlage natürlich unerwünscht.

Der Verschleiß der Lauffläche der Seilrolle, beispielsweise am Gummiring, wird im laufenden Betrieb üblicherweise überwacht, um gegebenenfalls Seilrollen mit zu großem Verschleiß rechtzeitig austauschen zu können, um Betriebseinschränkungen oder Betriebsunterbrechungen vorzubeugen. Das kann entweder durch Wartungspersonal durch visuelle Überprüfung in gewissen Prüfungsintervallen erfolgen, oder auch automatisiert. Beispielsweise ist aus der DE 197 52 362 A1 bekannt, mittels eines berührungslos arbeitenden Sensors im laufenden Betrieb nicht nur die Seillage, sondern auch eine Abnutzung der Lauffläche einer Seilrolle zu erfassen. Auch in der US 5,581,180 A und der WO 2019/038397 A1 wird beschrieben, dass mittels der Seillagensensoren auch ein Verschleiß der Seilrolle festgestellt werden kann. Zur Verschleißerkennung wird der Abstand zwischen einem ortsfest montierten Seillagensensor und dem Förderseil im Betrieb der Seilbahn ermittelt.

Die DE 10 2008 015 035 A1 beschreibt die Erfassung eines Verschleißes einer Seilrolle einer Seilbahn über die Drehzahl der Seilrolle. Die Erfassung der Drehzahl kann nur im Betrieb der Seilbahn ermittelt werden.

Aus der EP 3 620 340 A1, die unter Art. 54(3) EPÜ fällt, ist eine Seilrolle bekannt, in der ein Sensor zur Erfassung des Verschleißes einer Lauffläche der Seilrolle in der Lauffläche integriert ist. Die Seilrolle umfasst auch eine Drahtlosübertragungsvorrichtung, mit dem ein mit dem Sensor erfasster Sensorwert an eine Überwachungsvorrichtung gesendet wird. Nachdem die Lauffläche nur im Betrieb der Seilbahn einem Verschleiß unterliegt, kann damit auch nur der Verschleiß während des Betriebes erfasst werden.

Die Betriebsbedingungen einer Seilbahnanlage sind allerdings sehr rau. Im Betrieb sind über einen Tag Umgebungstemperaturschwankungen von mehreren 10°C möglich, was zu einer Wärmedehnung (im Sinne eines kleiner oder größer Werdens) der Seilrolle führen kann. Dabei kann sich der Abstand zwischen Förderseil und einem Seillagensensor merklich verändern, was die Zuverlässigkeit der Abstandsmessung negativ beeinflusst. Aufgrund der Reibung zwischen Förderseil und Seilrolle, bzw. Lauffläche der Seilrolle, können sich Seilrollen im Betrieb gegenüber der Umgebung und insbesondere auch gegenüber dem Sensor erwärmen, was ebenso zu einer Veränderung des erfassten Abstandes zwischen dem Förderseil und dem Seillagensensor führen kann. Hierbei kann sich der erfasste Abstand im Betrieb um einige Millimeter verändern. Das Förderseil selbst unterliegt im Betrieb Schwingungen, beispielsweise aufgrund des Überfahrens der Seilrollen mit den Seilklemmen der Fahrzeuge oder aufgrund äußerlicher Einflüsse auf die Seilbahnanlage wie Wind, womit sich ebenfalls der erfasste Abstand zwischen Seillagensensor und Förderseil im Betrieb ständig verändern kann. All das macht die Verschleißerkennung einer Seilrolle mit einem berührungslosen Sensor durch Abstandsmessung im Betrieb unzuverlässig und schwierig.

Es ist daher eine Aufgabe der gegenständlichen Erfindung die Verschleißerkennung einer Seilrolle einer Seilbahnanlage zu verbessern, insbesondere zuverlässiger zu machen, und damit den Betrieb, vor allem die Wartung, einer Seilbahnanlage zu verbessern.

Diese Aufgabe wird dadurch gelöst, dass der Abstand im Stillstand der Seilbahnanlage gemessen und aus dem im Stillstand gemessenen Abstand auf den Verschleiß der zumindest einen Seilrolle geschlossen wird. Durch die Erfassung des Verschleißes einer Seilrolle im Stillstand der Seilbahnanlage, können auf einfache Weise die durch den Betrieb hervorgerufenen Einflüsse auf die Abstandsmessung reduziert oder sogar eliminiert werden. Es wurde insbesondere erkannt, dass der Abstand nicht während des Betriebes erfasst werden muss, weil sich der aus dem Abstand ergebende Verschleiß ohnehin nur langsam ändert. Deshalb ist es vorteilhaft, wenn der Abstand im Stillstand erfasst wird, da man damit auch genauere Ergebnisse erhält. Das ermöglicht es auch, in besonders vorteilhafter Ausführung einen bereits vorhandenen Seillagensensor als Seilsensor zur Abstandserfassung zu nutzen. Damit ist kein zusätzlicher Hardwareaufwand erforderlich. Das ermöglicht es auch, die Seilrolle der Seilbahnanlage rechtzeitig auszutauschen, wenn der Verschleiß einen vorgegebenen zulässigen Grenzwert überschreitet.

Um die Genauigkeit der Erfassung des Verschleißes zu erhöhen, kann vorgesehen sein, die Temperatur der Seilrolle zu erfassen und die Wärmedehnung der Seilrolle bei der erfassten Temperatur bei der Erfassung des Abstandes zu berücksichtigen. Damit können allfällige temperaturbedingte Wärmedehnungen der Seilrolle berücksichtigt oder kompensiert werden. Die Erfassung des Abstandes, und damit auch des Verschleißes, kann dabei auch eine bestimmte Referenztemperatur bezogen werden.

In einer vorteilhaften Ausgestaltung wird der Abstand an mehreren Tagen, vorzugsweise an jedem Tag oder jeden x-ten Tag mit x>1 oder in einem vorgegebenen zeitlichen Abstand, gemessen, insbesondere immer zum gleichen Zeitpunkt eines vollen Tages. Das ermöglicht es auch, einen zeitlichen Verlauf des Verschleißes zu erfassen. Aus dem zeitlichen Verlauf können weitere Erkenntnisse zur Seilbahnanlage gewonnen werden. Beispielsweise könnte bei einem zu schnellen Verschleiß einer Seilrolle über einen bestimmten Zeitraum auf ein anderes Problem der Seilbahnanlage geschlossen werden.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigt
Fig.1 einen Teil einer Seilbahnanlage,
Fig.2 einen Teil einer Rollenbatterie einer Seilbahnanlage,
Fig.3 einen Teil einer Seilrolle einer Seilbahnanlage,
Fig.4 ein Messfeld eines berührungslosen Seilsensors,
Fig.5 den zeitlichen Verlauf des erfassten Verschleißes von Seilrollen.

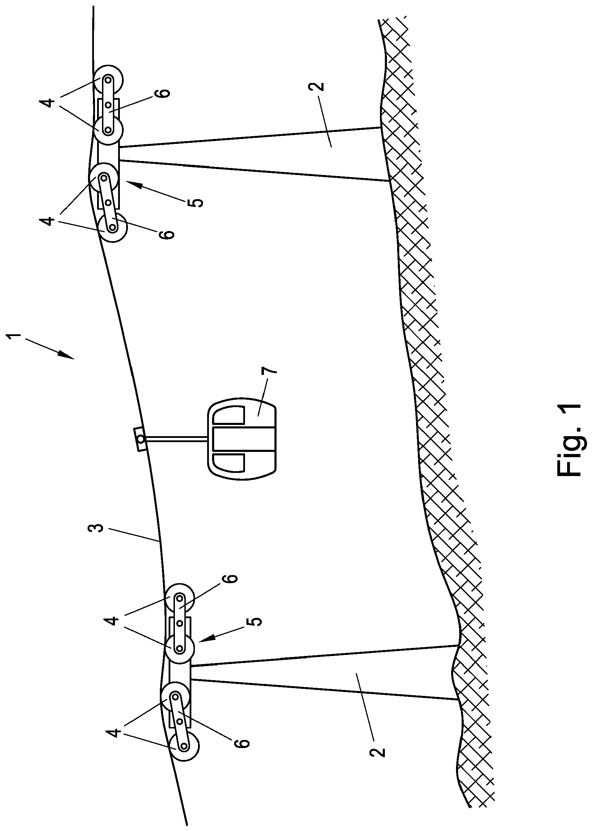

In Fig.1 ist ein Teil einer hinlänglich bekannten Seilbahnanlage 1 mit zwei Seilbahnstützen 2 dargestellt. Zumindest ein Förderseil 3 wird zwischen zwei (nicht dargestellten) Seilbahnstationen über Seilrollen 4 geführt, entweder umlaufend oder pendelnd. Die Seilrollen 4 sind beispielhaft an einer an einer Seilbahnstütze 2 angeordneten Rollenbatterie 5 drehbar gelagert. Eine Rollenbatterie 5 umfasst in der Regel eine Vielzahl von in Bewegungsrichtung des Förderseils 3 hintereinander angeordneter Seilrollen 4. Eine Seilrolle 4, oder eine Gruppe Seilrollen 4, sind auch oftmals an der Rollenbatterie 5 drehbar gelagerten Schwingen 6 angeordnet. Am Förderseil 3 sind eine Vielzahl von Fahrzeugen 7, beispielsweise Gondeln oder Sesseln, in bekannter Weise angeklemmt, beispielsweise mit in den Seilbahnstationen lösbaren Seilklemmen, aber auch mit fixer Klemmung. Die Fahrzeuge 7 werden auf diese Weise auf dem Förderseil 3 zwischen den Seilbahnstationen bewegt. Auch in einer Seilbahnstation können eine Anzahl von Seilrollen 4 angeordnet sein, über die das Förderseil 3 geführt wird.

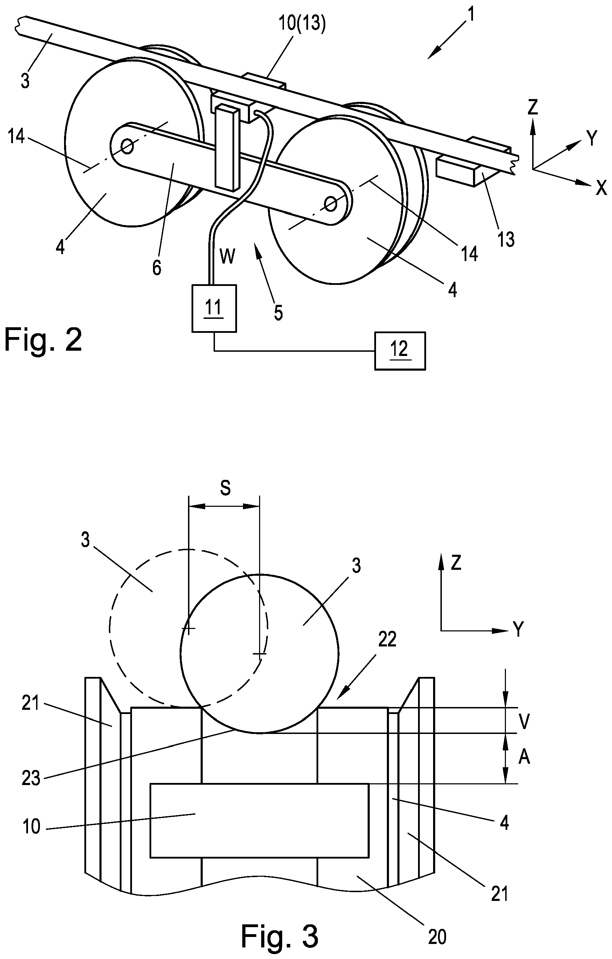

Fig.2 zeigt einen Teil einer Rollenbatterie 5 mit zwei Seilrollen 4. An der Seilbahnanlage 1, beispielsweise an der Rollenbatterie 5, ist zumindest ein berührungsloser Seilsensor 10 angeordnet. Der berührungslose Seilsensor 10 ist vorzugsweise in einer bekannten, definierten Lage zu einer Seilrolle 4 angeordnet, insbesondere in einem definierten Abstand A zum Förderseil 3. Wenn der berührungslose Seilsensor 10 an einer Schwinge 6, wie in Fig.2, angeordnet ist, dann ist der berührungslose Seilsensor 10 vorzugsweise in einer definierten Lage zu den Seilrollen 4 an der Schwinge 6 angeordnet. Wenn die Seilrollen 4 ortsfest an der Rollenbatterie 5 drehbar gelagert sind (also nicht auf Schwingen 6), dann ist der berührungslose Seilsensor 10 vorzugsweise in definierter Lage zu den Seilrollen 4 der Rollenbatterie 5 angeordnet. An einer Rollenbatterie 5 können aber auch mehrere berührungslose Seilsensoren 10 vorgesehen sein, beispielsweise im Bereich der in Förderrichtung X des Förderseils 3 gesehenen äußeren Enden der Rollenbatterie 5. Es sei aber angemerkt, dass die Seilrolle 4 und auch der berührungslose Seilsensor 10 auch an einem anderen stationären Teil der Seilbahnanlage 1 drehbar gelagert angeordnet sein können, beispielsweise in einer Seilbahnstation oder im Bereich der Einfahrt in oder Ausfahrt aus einer Seilbahnstation oder an einem anderen Bauteil einer Seilbahnstütze 2. An einer Seilbahnanlage 1 sind üblicherweise eine Vielzahl von Seilsensoren 10 verteilt angeordnet.

Der berührungslose Seilsensor 10 kann ein induktiv oder kapazitiv arbeitender Sensor sein, beispielsweise ein induktiver oder kapazitiver Näherungssensor, ein Hall Sensor oder ein Wirbelstromsensor. Vorzugsweise dient der berührungslose Seilsensor 10 gleichzeitig als Seillagensensor zur Erfassung der seitlichen Ausweichung in Querrichtung Y (quer zur Förderrichtung X) des Förderseils 3 an der Seilrolle 4. In diesem Fall ist der berührungslose Seilsensor 10 vorzugsweise auch in einer definierten seitlichen Lage zur Seilrolle 4 ausgerichtet. Es ist aber auch denkbar, dass ein separater Seillagensensor 13 (oder auch mehrere Seillagensensoren 13) vorgesehen ist, wie in Fig.2 angedeutet.

Der berührungslose Seilsensor 10 ist mit einer Auswerteeinheit 11 (Hardware und/oder Software) verbunden, um die damit erfassten Sensorwerte auszuwerten, wie nachfolgend noch im Detail beschrieben wird. Dabei kann vorgesehen sein, dass jeder berührungslose Seilsensor 10 mit einer eigenen Auswerteeinheit 11 verbunden ist, oder dass mehrere berührungslose Seilsensoren 10, beispielsweise die Seilsensoren 10 einer (oder auch beider) Förderrichtung X einer Seilbahnstütze 2, mit jeweils einer Auswerteeinheit 11 verbunden sind. Die zumindest eine Auswerteeinheit 11 ist mit der Seilbahnsteuerung 12 (Hardware und Software) verbunden, was sowohl drahtlos als auch drahtgebunden erfolgen kann. Die Seilbahnsteuerung 12 ist üblicherweise in einer Seilbahnstation angeordnet. Eine Auswerteeinheit 11 kann auch in die Seilbahnsteuerung 12 integriert werden. Falls ein eigener Seillagensensor 13 verwendet wird, kann die Auswerteeinheit 11 gleichzeitig auch mit dem Seillagensensor 13 verbunden sein, um die Seillage des Förderseils 3 in Querrichtung Y zu erfassen. Es kann aber auch eine eigene Auswerteeinheit für den Seillagensensor 13 vorgesehen sein. Eine Auswerteeinheit 11 kann auch in den Seilsensor 10, oder einen Seillagensensor 13, integriert sein.

Fig.3 zeigt eine Seilrolle 4 im Detail. Die Seilrolle 4 besteht im Wesentlichen üblicherweise aus einem zentralen Rollenkörper (in Fig.3 nicht sichtbar), der mittels Wälzlager oder anderem Lager auf einer zentralen Lagerbuchse (in Fig.3 nicht sichtbar) drehbar gelagert angeordnet ist. An der Lagerbuchse kann die Seilrolle 4 an der Seilbahnanlage 1 angeordnet werden. Natürlich könnte die Lagerbuchse auch wegfallen und die Seilrolle direkt am Lager an der Seilbahnanlage 1 drehbar gelagert angeordnet werden. Am Rollenkörper kann eine Gummischeibe 20 zwischen zwei seitlich angeordneten Bordscheiben 21 angeordnet sein. Die Gummischeibe 20 bildet die Lauffläche 22 der Seilrolle 4 aus, in die eine Seilrille 23 in Form einer Vertiefung zur Führung des Förderseils 3 vorgesehen sein kann. Die Gummischeibe 20 ist üblicherweise austauschbar angeordnet. Selbstverständlich könnte aber auch der Rollenkörper selbst die Lauffläche 22 und/oder eine Bordscheibe 21 der Seilrolle 4 ausbilden. Im Betrieb der Seilbahnanlage 1 kann es vorkommen, dass das Förderseil 3 in Querrichtung Y seitlich aus der Seilrille 23 abgelenkt wird, wie in Fig.3 strichliert angedeutet. Eine solche Auslenkung S in Querrichtung Y kann im Betrieb der Seilbahnanlage 1 durch einen Seillagensensor 13 erkannt werden.

Aus Fig.3 ist auch ersichtlich, dass sich das Förderseil 3 mit fortlaufendem Verschleiß der Lauffläche 22 immer weiter in die Lauffläche 22 der Seilrolle 4 frisst, womit das Förderseil 3 in Richtung der Drehachse 14 der Seilrolle 4 wandert. Aus Sicherheitsgründen ist nur ein gewisser Verschleiß der Seilrolle 4 zulässig. Mit zunehmendem Verschleiß vergrößert sich die Vertiefung V der Seilrille 23. Bei zu großem Verschleiß ist die Seilrolle 4 oder die Gummischeibe 20, oder allgemein der die Lauffläche 22 ausbildende Teil der Seilrolle 4, zu tauschen.

Der berührungslose Seilsensor 10 ist in einer bekannten Lage zur Seilrolle 4 angeordnet, sodass sich ein Abstand A (in Richtung Z normal auf die Förderrichtung X und die Querrichtung Y) zwischen dem Förderseil 3 und dem Seilsensor 10 ergibt. Vorzugsweise ist der Seilsensor 10 in einer definierten Lage zur nicht verschlissenen Seilrolle 4 angeordnet, um eine definierte Referenzposition zu haben. Die Referenzposition kann aber auch anders festgelegt sein. Nimmt der Verschleiß zu, womit sich die Vertiefung V vergrößert, nimmt der Abstand A ab, womit der Verschleiß der Lauffläche 22 der Seilrolle 4 in Form der Zunahme der Vertiefung V erkannt werden kann, wenn der Abstand A mit dem berührungslosen Seilsensor 10 gemessen wird.

Üblicherweise wird der mit dem Seilsensor 10 erfasste Sensorwert W in der Auswerteeinheit 11 auf den Abstand A (oder äquivalent auf die Vertiefung V) umgerechnet. Typischerweise ist der Abstand A die kürzeste Strecke zwischen Seilsensor 10 und dem Förderseil, in der Regel in Richtung Z.

Um den Einfluss des Betriebs der Seilbahnanlage 1 auf die Abstandsmessung zu reduzieren, oder vorzugsweise gänzlich zu eliminieren, ist erfindungsgemäß vorgesehen, dass nur ein im Stillstand der Seilbahnanlage 1 gemessener Abstand A für die Verschleißerkennung herangezogen wird. Der Abstand A wird also bei stillstehendem Förderseil 3 gemessen. Bei stillstehendem Förderseil 3 kann angenommen werden, dass sich das Förderseil 3 in der Seilrille 23 der Seilrolle 4 befindet und dass das Förderseil 3 nicht, oder nur sehr gering, schwingt.

Außerdem kann durch das Messen des Abstandes A im Stillstand der Seilbahnanlage 1 der Temperatureinfluss auf die Messung des Abstandes A reduziert, idealerweise sogar eliminiert, werden. Im Stillstand kann es zu keiner Reibung zwischen Förderseil 3 und der Seilrolle 4 kommen, womit die Seilrolle 4 keiner zusätzlichen durch die Reibungswärme hervorgerufenen Wärmedehnung unterliegt, was die Messung des Abstandes A genauer macht. Die Seilrolle 4 und der Seilsensor 10 haben folglich im Wesentlichen dieselbe Temperatur (im Wesentlichen die Umgebungstemperatur), sofern der Seilsensor 10 keiner übermäßigen Eigenerwärmung durch die verbaute Elektronik unterliegt oder unterschiedliche Sonneneinstrahlung auftritt (z.B. durch eine Beschattung), womit es keine Messstörungen durch Temperaturunterschiede zwischen der Temperatur der Seilrolle 4 und der Temperatur des Seilsensors 10 gibt.

Es könnte auch die zur Messung des Abstandes A herrschende Temperatur gemessen werden, beispielsweise mittels eines Temperaturfühlers im Seilsensor 10 oder in der Umgebung der Seilrolle 4, und der gemessene Abstand A auf eine vorgegebene Referenztemperatur (z.B. 21°C) korrigiert werden. Damit kann beispielsweise eine allfällige Wärmedehnung durch Sonneneinstrahlung kompensiert werden. Dazu kann mit der gemessenen Temperatur die Wärmedehnung der Seilrolle 4 ermittelt werden, beispielsweise mittels hinterlegter Tabellen, einem mathematischen Modell oder einer Formel, und die temperaturbedingte Ausdehnung der Seilrolle 4 (was den Abstand A verändert) bei der Ermittlung des Abstandes A berücksichtigt werden.

Vorzugsweise wird der Abstand A immer zum gleichen Zeitpunkt eines vollen Tages gemessen, beispielsweise vor Inbetriebnahme der Seilbahnanlage 1 am Morgen, vorzugsweise vor oder nicht zu lange nach dem Sonnenaufgang, oder nach der Außerbetriebnahme der Seilbahnanlage 1 am Abend, vorzugsweise nach Sonnenuntergang oder nicht zu lange vor Sonnenuntergang. Wenn nach der Außerbetriebnahme gemessen wird, dann wird vorzugsweise eine gewisse festgelegte Zeit mit der Messung gewartet, beispielsweise eine Stunde, damit sich die Seilrollen 4 auf die Umgebungstemperatur abkühlen können. Da aber auch die Sonneneinstrahlung zu einer Wärmedehnung der Seilrollen 4 führen kann, wird vorzugsweise in der Nacht (als zwischen Sonnenuntergang und Sonnenaufgang) gemessen. Es kann auch ein beliebiger Zeitpunkt zwischen Außerbetriebnahme und Inbetriebnahme für die Messung des Abstandes A festgelegt sein, beispielsweise Messung immer um Mitternacht. Nachdem sich der Verschleiß nur langsam in einer Zunahme der Vertiefung V äußern wird und auch die Messauflösung des Seilsensors 10 beschränkt ist, kann es auch ausreichen, wenn der Abstand A bzw. die damit im Zusammenhang stehende Vertiefung V nicht jeden vollen Tag sondern in einem größerem Zeitabstand gemessen wird, beispielsweise jede Woche oder jeden x-ten vollen Tag mit x >1.

Die Messung des Abstandes A im Stillstand der Seilbahnanlage 1 ermöglicht es aber auch in besonders vorteilhafter Weise als Seilsensor 10 einen herkömmlichen berührungslosen Seillagensensor 13 zu verwenden, der in heutigen Seilbahnanlagen 1 ohnehin verbaut ist. Insbesondere können besonders einfach aufgebaute berührungslose Seillagensensoren 13 als Seilsensor 10 verwendet werden, mit denen aufgrund des Messprinzips an sich nicht erkannt werden kann, ob das Förderseil 3 nach links, nach rechts (also in Querrichtung) oder durch Verschleiß in Richtung Z zur Drehachse 14 der Seilrolle 4 wandert.

Ein Beispiel eines solchen berührungslosen Seillagensensors 13 ist ein induktiver Näherungssensor. Induktive Näherungssensoren messen den Abstand zum Messobjekt berührungslos mittels induzierter Spannung. Beispielsweise bildet eine mit Wechselstrom gespeiste Sensorspule des Sensors um die Sensorspule ein elektromagnetisches Feld. Wenn ein elektrisch leitfähiges Messobjekt (hier das Förderseil 3) in dieses Feld gelangt, werden in dem Messobjekt Wirbelströme induziert, deren elektromagnetische Felder dem von der Sensorspule erzeugten elektromagnetischen Feld entgegenwirkt, wodurch sich die Impedanz der Sensorspule verändert. Diese Veränderung steht in einem definierten Verhältnis zur Distanz des Messobjektes und wird entsprechend ausgewertet, beispielsweise elektronisch oder nach Digitalwandlung durch entsprechende Software. Natürlich können auch andere Messprinzipien verwendet werden.

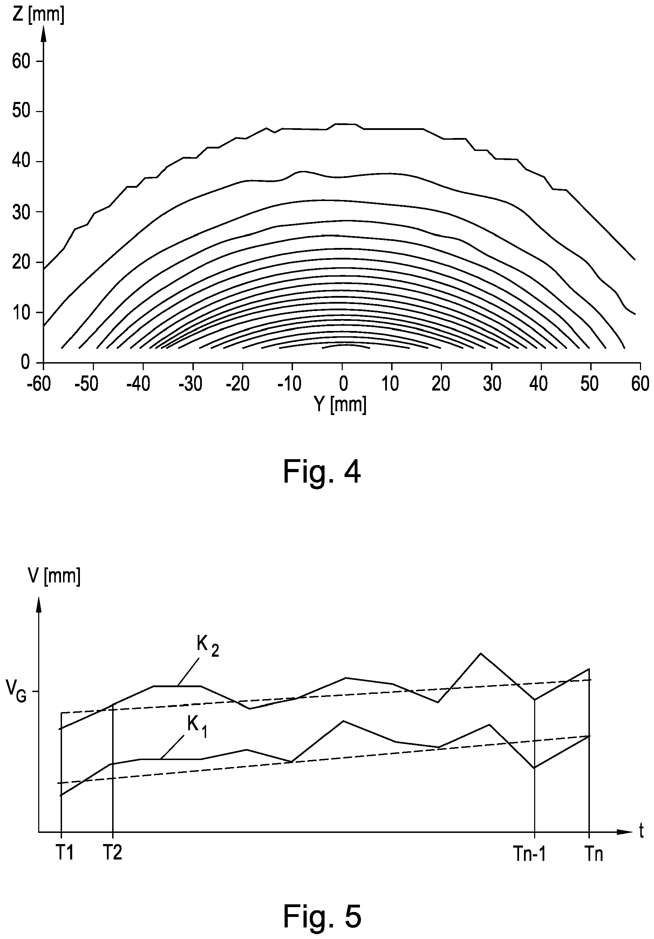

Ein beispielhaftes Messkennfeld eines berührungslosen Seilsensors 10, beispielsweise ein induktiver Näherungssensor, ist in Fig.4 dargestellt, das Linien konstanter Sensorwerte W über die Position des Messobjekts (in Querrichtung Y und Richtung Z) bezogen auf den Seilsensor 10 zeigt. Die Position des Messobjekts wird hierbei ausgehend von einer Nullposition Y=0 (beispielsweise die Position einer Seilrille 23) nach links (Y negativ) und nach rechts (Y positiv) und als Abstand in Richtung Z zwischen Seilsensor 10 und dem Messobjekt (das Förderseil 3) angegeben. Aus dem Messkennfeld erkennt man, dass jeder erfasste Sensorwert W als Abweichung nach links, rechts oder im in Richtung Z aufgefasst werden kann, womit aus dem Sensorwert W aber nicht auf die konkrete Position des Messobjekts bezogen auf den Seilsensor 10 rückgeschlossen werden kann. Eine Unterscheidung zwischen Querrichtung Y und Richtung Z ist mit einem solchen Seilsensor 10 aber trotzdem möglich, weil eine seitliche Auslenkung des Förderseils 3 in Querrichtung Y den Abstand des Förderseils 3 zum Seilsensor 10 vergrößert, während der Verschleiß den Abstand des Förderseils zum Seilsensor 10 verkleinert. Ausgehend von einer bekannten Referenzposition kann daher eine Auslenkung in Querrichtung Y und ein Verschleiß in Richtung Z durch eine Zunahme oder Abnahme des erfassten Sensorwertes erkannt werden. Beispielsweise nimmt der Sensorwert bei einer Auslenkung des Förderseils 3 in Querrichtung Y ab und bei Verschleiß in Richtung Z (also bei einer Annäherung des Förderseils 3 an den Seilsensor 10) zu. Damit kann ein erfasster Sensorwert W des Seilsensors 10 eindeutig einer seitlichen Abweichung des Förderseils 3 in Querrichtung Y oder einer Änderung des Abstandes A in Richtung Z zugeordnet werden.

Gleiche oder ähnliche Zusammenhänge können sich auch bei Anwendung anderer Messprinzipien ergeben. Es ist aber grundsätzlich auch möglich Sensoren zu verwenden, die aufgrund des Messprinzips oder der Auswertung der Sensorwerte W zwischen seitlichen Abweichungen und Abstandsänderungen unterscheiden können. Nachdem solche Sensoren aber aufwendiger und damit teurer sind, werden diese bei Seilbahnanlagen 1 üblicherweise nicht verwendet, insbesondere weil bei einer Seilbahnanlage 1 in der Regel eine Vielzahl von Seilsensoren 10 benötigt werden (typischerweise an jeder Seilbahnstütze in jeder Richtung des Förderseils 3 zumindest zwei solche Seilsensoren 10, was bei zwanzig Seilbahnstützen schon zu achtzig Sensoren führt).

Für den Seilsensor 10 kann bei Messung im Stillstand angenommen werden, dass sich das Förderseil 3 in der Seilrille 23 der Seilrolle 4 befindet. Damit kann der im Stillstand gemessene Sensorwert W dem Abstand A zwischen dem Seilsensor 10 und Förderseil 3 jedenfalls zugeordnet werden, ganz unabhängig von der Art des Seilsensors 10.

Nachdem der Seilsensor 10 üblicherweise in Förderrichtung X von der Seilrolle 4 entfernt angeordnet ist, kann der erfasste Sensorwert W mit der bekannten Anordnung und Geometrie von Seilrolle 4 und Seilsensor 10 auf den Abstand A (oder äquivalent auf die Vertiefung V) oder einen damit in Zusammenhang stehenden Verschleißwert umgerechnet werden, um die Genauigkeit zu erhöhen.

Selbstverständlich kann mit einem Seilsensor 10 nur der Verschleiß von Seilrollen 4 zuverlässig erfasst werden, die in hinreichender Näher und in bekannter Lage zum Seilsensor 10 angeordnet sind. Je weiter entfernt eine Seilrolle 4 von Seilsensor 10 angeordnet ist, umso ungenauer wird die Erfassung des Verschleißes werden. Aufgrund der bekannten Anordnung und Geometrie der Seilrollen 4 in einem Bereich der Seilbahnanlage 1, beispielsweise an einer Rollenbatterie 5 oder einer Schwinge 6, kann aber durchaus von erfassten Sensorwerten Weines Seilsensors 10 im Bereich der Anordnung der Seilrollen 4 auf den Verschleiß mehrerer Seilrollen 4 der Anordnung umgerechnet werden.

Um die Genauigkeit zu erhöhen, könnte auch Sensorwerte W verschiedener Seilsensoren 10 ausgewertet werden, um den Verschleiß (z.B. der Wert der Vertiefung V) einer Seilrolle 4 zu ermitteln. Beispielsweise könnte der Verschleiß einer Seilrolle 4 mit Sensorwerten W verschiedener Seilsensoren 10 ermittelt werden, die dann gemittelt werden. Dabei könnten bei der Mittelung auch Gewichtungen berücksichtigt werden, die die Entfernung des Seilsensors 10 von der Seilrolle 4 bewerten.

In Fig.5 ist beispielhaft der zeitliche Verlauf K₁, K₂ der Zunahme der Vertiefung V über einen Zeitraum T1 bis Tn, der beispielsweise einen Zeitraum von 3 Monaten abdeckt, für zwei Seilrollen 4 dargestellt. Ausgehend von einer Vertiefung V zu Beginn im Zeitpunkt T1 nimmt die Vertiefung V bis zum Ende des Zeitraums bei Tn kontinuierlich zu.

Es ist zu erkennen, dass eine erfasste Vertiefung V trotz der Messung bei Stillstand der Seilbahnanlage 1 Schwankungen unterliegen kann, was auf äußerliche Einflüsse oder auch auf Messungenauigkeiten zurückgeführt werden kann. Um diese Schwankungen auszugleichen kann der Verschleißtrend auch durch eine Regressionsgerade (in Fig.5 strichliert angedeutet), oder einer anderen Regression, angenähert werden, um zu jedem Zeitpunkt, insbesondere auch zwischen den Messungen, einen Verschleißwert ermitteln zu können.

Es kann ein Grenzwert V_{G} für den zulässigen Verschleiß, beispielsweise in Form einer maximal zulässigen Vertiefung V, vorgegeben sein (in Prozent oder als absoluter Wert). Erreicht der Verschleiß einer Seilrolle 4 den Grenzwert V_{G} kann von der Auswerteeinheit 11 oder der Seilbahnsteuerung 12 eine Meldung ausgegeben werden, um einen notwendigen Wechsel der Seilrolle 4 oder des Rollengummis 20 der Seilrolle 4 anzuzeigen. Die Meldung kann über eine geeignete Kommunikationsleitung auch an eine entfernte Stelle gesendet werden, beispielsweise an eine Wartungszentrale, von der aus die Wartung koordiniert wird.

## Patentansprüche

1. Verfahren zum Erfassen eines Verschleißes zumindest einer Seilrolle (4) einer Seilbahnanlage (1) mit einem Förderseil (3), das über die zumindest eine Seilrolle (4) geführt wird, und mit zumindest einem Seilsensor (10), der in einer bekannten Lage zur Seilrolle (4) angeordnet wird und mit dem der Abstand (A) zwischen dem Förderseil (3) und dem Seilsensor (10) erfasst wird, **dadurch gekennzeichnet, dass** der Abstand (A) im Stillstand der Seilbahnanlage (1) gemessen wird und aus dem im Stillstand gemessenen Abstand (A) auf den Verschleiß der zumindest einen Seilrolle (4) geschlossen wird.

2. Verfahren nach Anspruch 1, **dadurch gekennzeichnet, dass** die Temperatur der Seilrolle (4) erfasst wird und die Wärmedehnung der Seilrolle (4) bei der erfassten Temperatur bei der Erfassung des Abstandes (A) berücksichtigt wird.

3. Verfahren nach Anspruch 1 oder 2, **dadurch gekennzeichnet, dass** mit dem zumindest einen Seilsensor (10) der Verschleiß zumindest einer weiteren Seilrolle (4) erfasst wird.

4. Verfahren nach Anspruch 1 oder 2, **dadurch gekennzeichnet, dass** der Verschleiß der zumindest einen Seilrolle (4) mit zumindest einem weiteren Seilsensor (10) erfasst wird und die mit den verschiedenen Seilsensoren (10) erfassten Verschleiße zum Verschleiß der zumindest einen Seilrolle (4) gemittelt werden.

5. Verfahren nach einem der Ansprüche 1 bis 4, **dadurch gekennzeichnet, dass** der Abstand (A) an mehreren Tagen, vorzugsweise an jedem Tag oder jeden x-ten Tag mit x>1 oder in einem vorgegebenen Zeitabstand, gemessen wird.

6. Verfahren nach Anspruch 5, **dadurch gekennzeichnet, dass** der Abstand (A) immer zum gleichen Zeitpunkt eines vollen Tages gemessen wird.

7. Verfahren nach Anspruch 5 oder 6, **dadurch gekennzeichnet, dass** der zeitliche Verlauf des Verschleißes erfasst wird.

8. Verwendung des Verfahrens nach einem der Ansprüche 1 bis 7 zum Betreiben einer Seilbahnanlage (1), wobei die Seilrolle (4) der Seilbahnanlage (1) ausgetauscht wird, wenn der Verschleiß einen vorgegebenen zulässigen Grenzwert (V_{G}) überschreitet.

## Claims

1. Method for detecting wear on at least one cable sheave (4) of a cable car system (1) having a hoisting cable (3), which is guided over the at least one cable sheave (4), and having at least one cable sensor (10) which is arranged in a known position with respect to the cable sheave (4) and by means of which the distance (A) between the hoisting cable (3) and the cable sensor (10) is detected, **characterized in that** the distance (A) is measured when the cable car system (1) is at a standstill and the wear on the at least one cable sheave (4) is deduced from the distance (A) measured at a standstill.

2. Method according to claim 1, **characterized in that** the temperature of the cable sheave (4) is detected and the thermal expansion of the cable sheave (4) at the detected temperature is taken into account when the distance (A) is detected.

3. Method according to either claim 1 or claim 2, **characterized in that** the at least one cable sensor (10) is used to detect the wear on at least one further cable sheave (4).

4. Method according to either claim 1 or claim 2, **characterized in that** the wear on the at least one cable sheave (4) is detected by at least one further cable sensor (10) and the wear detected by the various cable sensors (10) is averaged for the wear on the at least one cable sheave (4).

5. Method according to any of claims 1 to 4 , **characterized in that** the distance (A) is measured on several days, preferably every day or every xth day where x > 1 or at a predetermined time interval.

6. Method according to claim 5, **characterized in that** the distance (A) is always measured at the same point in time in a full day.

7. Method according to either claim 5 or claim 6, **characterized in that** the progression of the wear over time is detected.

8. Use of the method according to any of claims 1 to 7 for operating a cable car system (1), wherein the cable sheave (4) of the cable car system (1) is replaced when the wear exceeds a predetermined permissible limit value (V_{G}).

## Revendications

1. Procédé permettant de détecter l'usure d'au moins une poulie (4) d'une installation de téléphérique (1) comportant un câble de transport (3) qui est guidé sur l'au moins une poulie (4), et comportant au moins un capteur de câble (10) qui est disposé dans une position connue par rapport à la poulie (4) et avec lequel la distance (A) entre le câble de transport (3) et le capteur de câble (10) est détectée, **caractérisé en ce que** la distance (A) est mesurée à l'arrêt de l'installation de téléphérique (1) et l'usure de l'au moins une poulie (4) est déterminée à partir de la distance (A) mesurée à l'arrêt.

2. Procédé selon la revendication 1, **caractérisé en ce que** la température de la poulie (4) est détectée et la dilatation thermique de la poulie (4) à la température détectée est prise en compte lors de la détection de la distance (A).

3. Procédé selon la revendication 1 ou 2, **caractérisé en ce que** l'usure d'au moins une autre poulie (4) est détectée par l'au moins un capteur de câble (10).

4. Procédé selon la revendication 1 ou 2, **caractérisé en ce que** l'usure de l'au moins une poulie (4) est détectée par au moins un autre capteur de câble (10) et les usures détectées par les différents capteurs de câble (10) sont moyennées pour détecter l'usure de l'au moins une poulie (4).

5. Procédé selon l'une des revendications 1 à 4, **caractérisé en ce que** la distance (A) est mesurée sur plusieurs jours, de préférence chaque jour ou chaque xième jour avec x > 1 ou à un intervalle de temps prédéfini.

6. Procédé selon la revendication 5, **caractérisé en ce que** la distance (A) est toujours mesurée au même moment d'un jour complet.

7. Procédé selon la revendication 5 ou 6, **caractérisé en ce que** l'évolution dans le temps de l'usure est détectée.

8. Utilisation du procédé selon l'une des revendications 1 à 7 permettant de faire fonctionner une installation de téléphérique (1), dans laquelle la poulie (4) de l'installation de téléphérique (1) est remplacée lorsque l'usure dépasse une valeur limite (V_{G}) autorisée prédéfinie.
